# EUROPÄISCHE PATENTSCHRIFT

(11) **EP 3 403 703 B1**
(45) Veröffentlichungstag und Bekanntmachung des Hinweises auf die Patenterteilung: **24.07.2019**
(21) Anmeldenummer: 18000265.1
(22) Anmeldetag: 16.03.2018
(51) Int. Cl.: A63G 7/00, F16H 25/24

(54) **LINEARBLOCKIERVORRICHTUNG MIT EINER ENTLANG EINER ACHSE LÄNGSVERSCHIEBLICHEN IN EINEM GEHÄUSE GEFÜHRTEN LINEAREINRICHTUNG UND BAUGRUPPEN-SYSTEM ZUR SICHERUNG UND FREIGABE VON PERSONEN, GEGENSTÄNDEN ODER DERGLEICHEN MIT EINER DERARTIGEN LINEARBLOCKIERVORRICHTUNG**
LINEAR BLOCKING DEVICE WITH A PARTICLE BEAM TRAVELLING ALONG AN AXIS INTO A HOUSING AND ASSEMBLY SYSTEM FOR SECURING AND RELEASE OF PERSONS, OBJECTS OR SIMILAR WITH SUCH A LINEAR BLOCKING DEVICE
DISPOSITIF DE BLOCAGE LINÉAIRE DOTÉ D'UN DISPOSITIF LINÉAIRE MONTÉ LONGITUDINALEMENT MOBILE LE LONG D'UN AXE, GUIDÉ DANS UN BOÎTIER ET SYSTÈME DE MODULES DESTINÉ À LA SÉCURISATION ET À LA LIBÉRATION DE PERSONNES, D'OBJETS OU ANALOGUES AU MOYEN D'UN TEL DISPOSITIF DE BLOCAGE LINÉAIRE

(30) Priorität: 16.05.2017 DE 102017004664
(43) Veröffentlichungstag der Anmeldung: 21.11.2018
(73) Patentinhaber: Horst Thiele Maschinenbau-Hydraulische Geräte GmbH, 74196 Neuenstadt (DE)
(72) Erfinder: Thiele, Ewald, D-74196 Neuenstadt (DE)
(74) Vertreter: Clemens, Gerhard

(56) Entgegenhaltungen:
- WO-A1-2009/005337
- DE-A1- 3 412 139
- DE-A1-102009 028 568
- GB-A- 2 459 297
- US-A1- 2006 103 212

## Beschreibung

### TECHNISCHES GEBIET

Die vorliegende Erfindung betrifft eine Linearblockiervorrichtung mit einer entlang einer Achse längsverschieblichen in einem Gehäuse geführten Lineareinrichtung, wobei zumindest zwischen zwei Bewegungszuständen der Lineareinrichtung mittels einer anschließbaren oder integrierten Schalteinrichtung hin und her schaltbar ist, nämlich zwischen einem ersten Bewegungszustand, bei welchem die Lineareinrichtung entlang der Achse innerhalb einer begrenzten Wegstrecke entweder in die dem Gehäuse abgewandten Bewegungsrichtung oder in die dem Gehäuse zugewandten Bewegungsrichtung verschieblich ist und in die jeweils entgegengesetzte Richtung blockiert ist und einem zweiten Bewegungszustand, bei welchem die Lineareinrichtung entlang der Achse in die beiden entgegengesetzten Bewegungsrichtungen innerhalb einer begrenzten Wegstrecke verschieblich ist, wobei die Lineareinrichtung direkt oder indirekt auf eine vorhandene Dreheinrichtung einwirkt, wobei die Dreheinrichtung in Abhängigkeit von der Bewegungsrichtung der Lineareinrichtung in verschiedensinnige Drehrichtungen, insbesondere um die Achse, in Rotation versetzbar ist, eine, insbesondere mechanische, Blockiereinrichtung vorhanden ist, die direkt oder indirekt mit der Dreheinrichtung in Wirkverbindung steht oder bringbar ist, die Blockiereinrichtung von der Schalteinrichtung ansteuerbar ist, wodurch zwischen dem ersten Bewegungszustand und zweiten Bewegungszustand der Lineareinrichtung und damit zwischen den möglichen Drehrichtungen der Dreheinrichtung hin und her schaltbar ist.

Die vorliegende Erfindung betrifft weiterhin ein Baugruppensystem zur wahlweisen Sicherung von Personen, Gegenständen oder dergleichen.

Generell beschreibt das Linearisierungsproblem die Fragestellung, auf welche Art und Weise eine beidseitig freie lineare Bewegung eines geführten Bauteils in einer Bewegungsrichtung blockierbar ist.

### STAND DER TECHNIK

Derartige Linearblockiervorrichtungen und Baugruppensysteme zur Sicherung und Freigabe von Personen, Gegenständen oder dergleichen werden in vielen sicherheitsrelevanten Bereichen der Technik eingesetzt. Am Beispiel einer bei einem Fahrgeschäft (Achterbahn) zu sichernden Personen wird die Funktionsweise eines solchen Baugruppensystems sowie einer Linearblockiervorrichtung im Folgenden erläutert,

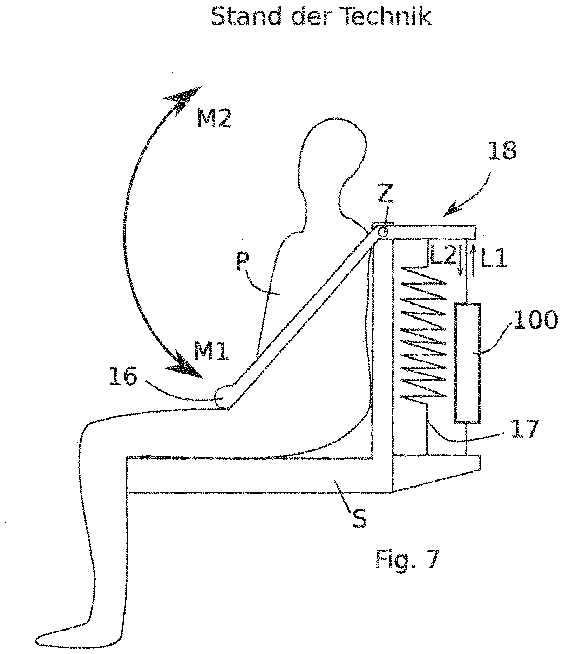

Fig. 7 zeigt schematisch eine Person P, die mittels eines Baugruppensystems 18 gesichert ist. Das Baugruppensystem 18 weist einen Sitz S und eine Sicherungseinrichtung 16, welche als Sicherheitsbügel ausgebildet ist, auf. Zwischen beiden Bauteilen sitzt die Person P in einem gesicherten Zustand. Der Sicherheitsbügel ist um ein Schwenkzentrum Z in die Schwenkrichtungen M1, M2 schwenkbar. Nun ist es bei der Fahrt mit einer Achterbahn einerseits erforderlich, dass nach dem Einstieg der Person P der Sicherheitsbügel 16 lediglich nach unten schwenkbar ist und die sitzende Person P während der Fahrt am Sitz S von diesem gesichert wird und andererseits nach der Beendigung der Fahrt der Sicherheitsbügel 16 frei bewegbar beziehungsweise schwenkbar ist, sodass dieser von selbst automatisch oder von der Person P geführt nach oben wegschwenkt und die Person P den Sitz S wieder verlassen kann. Zur Gewährleistung dieser Funktionsweise weist das Baugruppensystem 18 eine Linearblockiervorrichtung 100 auf, welche mit dem Sicherheitsbügel 16 gekoppelt ist. Die Linearblockiervorrichtung 100 kann so angesteuert werden, dass sie einerseits den Sicherheitsbügel in beide Richtungen der Linearbewegung L1, L2 und damit den Sicherheitsbügel 16 in beide Schwenkrichtungen M1, M2 frei gibt und andererseits die abwärts gerichtete Linearbewegung L2 blockiert ist, sodass analog die aufwärts gerichtete Schwenkbewegung M2 des Sicherheitsbügels blockiert ist. Zudem ist eine Feder 17, welche ebenfalls ein Teil des Baugruppensystems 18 darstellt, mit dem Sicherheitsbügel 16 und dem Sitz S gekoppelt, Die Feder 17 besitzt die Funktion eine nach oben gerichtete, die Person freigegebende Bewegung des Sicherheitsbügels 16 zu unterstützen. Auch ist in einem weiteren nicht dargestellten Ausführungsbeispiel die Sicherungseinrichtung 16 als linear verfahrbares Bauteil ausgebildet.

Bekannt ist es eine derartige Linearblockiervorrichtung 100 als ein hydraulisches Bauteil (hydraulische Blockierung) zu gestalten. Hierbei besitzt die Linearblockiervorrichtung eine Lineareinrichtung, die in einem Gehäuse geführt gelagert ist. An der äußeren, also an der dem Gehäuse abgewandten, Stirnseite der Lineareinrichtung befindet sich ein erstes Kuppelelement, welches mit dem Sicherheitsbügel direkt oder indirekt koppelbar ist. An der gegenüberliegenden Stirnseite der Lineareinrichtung sitzt innerhalb des Gehäuses zylinderartig ein Hydraulikkolben, der ein Teil eines Hydrauliksystems darstellt. Durch das gezielte Verlagern von Hydraulikflüssigkeit in Kammern, die sich in linearer Richtung beidseitig an die seitlichen Kolbenflächen anschließen, ist es somit möglich die Bewegung der Lineareinheit innerhalb einzelner Bewegungsrichtungen zu blockieren oder freizugeben. In der Fig. 7 ist die Linearblockiervorrichtung 100 lediglich schematisch dargestellt, auf eine detallierte Darstellung des hydraulischen Systems, also dessen einzelnen Komponenten, sowie deren Verschaltung wurde verzichtet.

Bei hydraulischen Systemen treten jedoch Probleme hinsichtlich der Dichtheit auf, da innerhalb des Systems nur sehr kleine Systemdrücke erforderlich sind, sodass die verbauten Dichtungen ihre Dichtwirkung nicht ordnungsgemäß entfalten können. Zudem findet bei hydraulischen Systemen generell eine stetige Diffusion von Gas, welches beispielsweise über ein vorhandenes Stickstoff-Reservoir oder von außerhalb in den Flüssigkeitsraum dringt, statt, sodass die Dämpfungseigenschaft der Hydraulikflüssigkeit durch die federnde Wirkung der eindiffundierten Gasblasen überlagert wird. Bei der zu sichernden Person entsteht dann im Betrieb der Eindruck die Sicherungseinrichtung beziehungsweise der Sicherheitsbügel würde nicht ordnungsgemäß funktionieren. Dieses Phänomen wird auch als "Spongy behavior" also als schwammiges Verhalten bezeichnet.

Diese Probleme, verursacht durch die Verwendung hydraulischer Komponenten, führen zum einen dazu, dass ein hoher Wartungsaufwand erforderlich ist und zum anderen zu einem erhöhten Sicherheitsrisiko im Betrieb, da bei einem Ausfall oder einer nachlassenden Wirkung des hydraulischen Systems die Fixierungswirkung der Linearblockiervorrichtung beziehungsweise der Sicherungseinrichtung nicht mehr gewährleistet werden kann.

In der US 2006/103212 A1 ist eine Linearblockiervorrichtung gemäß dem Oberbegriff des Anspruchs 1 beschrieben. Bei dieser Linearblockiervorrichtung wird eine Linearbewegung in eine Drehbewegung umgewandelt, um durch den Untersetzungseffekt eine ausreichend haltende Bremse verwenden zu können. Dabei gibt es zwei Bewegungszustände, nämlich Bewegung möglich in beide Richtungen und Bewegung blockiert in beide Richtungen.

### DARSTELLUNG DER ERFINDUNG

Ausgehend von dem genannten Stand der Technik liegt der vorliegenden Erfindung die Aufgabe beziehungsweise das Problem zugrunde, eine Linearblockiervorrichtung der eingangs genannten Art anzugeben, die eine einfache Montage ermöglicht, einen dauerhaft zuverlässigen Betrieb ermöglicht, einen geringen Wartungsaufwand besitzt, eine wirtschaftliche Herstellung ermöglicht und sich durch eine dauerhaft zuverlässige Blockier- und Freigabefunktion auszeichnet. Der vorliegenden Erfindung liegt weiterhin die Aufgabe zugrunde, ein Baugruppensystem anzugeben, welches einen dauerhaft zuverlässigen Betrieb ermöglicht, einen geringen Wartungsaufwand besitzt und sich durch eine dauerhaft zuverlässige Sicherungsfunktion auszeichnet.

Die erfindungsgemäße Linearblockiervorrichtung der eingangs genannten Art ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche 2 bis 09.

Die erfindungsgemäße Linearblockiervorrichtung zeichnet sich demgemäß dadurch aus, dass die Blockiereinrichtung eine Drehlagereinheit mit einem rotierbaren 1. Lagerelement und einem relativ dazu rotierbaren 2. Lagerelement aufweist, das 1. Lagerelement mit der Dreheinrichtung direkt oder indirekt gekoppelt ist und die Blockiereinrichtung eine Blockiereinheit aufweist, mittels derer die Drehbewegung des 2. Lagerelements in beiden Drehrichtungen blockierbar ist unddas 1. Lagerelement relativ zu dem 2. Lagerelement jeweils nur in eine Drehrichtung rotierbar ausgebildet ist und eine Relativrotation in die entgegengesetzte Drehrichtung blockiert ist.

Die Drehlagereinheit ist gemäß einer bevorzugten Ausführungsform als Freilauf ausgebildet ist, wobei das 1. Lagerelement und das 2. Lagerelement koaxial angeordnete, radial versetzte Ringkörper aufweisen, nämlich einen inneren Ringkörper und einen äußeren Ringkörper.

Die Blockiereinheit ist in einer bevorzugten Ausführungsform als Bremseinheit, insbesondere Formschluss- oder Reibschlussbremseinheit, ausgebildet. In einer weiteren besonders bevorzugten Ausführungsform ist die Blockiereinheit als elektromagnetische Bremseinheit ausgebildet.

Eine besonders bevorzugte Ausführungsform zeichnet sich dadurch aus, dass an die Drehlagereinheit beziehungsweise an das 2. Lagerelement eine Kontakteinheit angeformt oder angeschlossen ist auf die die Blockiereinheit einwirkt.

Eine Ausführungsform mit einer besonders hohen Funktionalität zeichnet sich dadurch aus, dass die Blockiereinrichtung beziehungsweise die Blockiereinheit durch die Schalteinheit ansteuerbar / aktivierbar ist, wobei die Schalteinheit als ein mechanisches, pneumatisches, hydraulisches und / oder elektronisches Bauteil ausgebildet ist.

Eine weitere alternative Ausgestaltung zeichnet sich dadurch aus, dass der zweite Bewegungszustand der Lineareinrichtung im aktivierten/ angesteuerten Zustand der Blockiereinrichtung beziehungsweise der Blockiereinheit vorliegt und der erste Bewegungszustand der Lineareinrichtung im inaktiven/nicht angesteuerten Zustand der Blockiereinrichtung beziehungsweise der Blockiereinheit vorliegt.

In analoger Weise zeichnet sich eine weitere alternative Ausgestaltung der Linearblockiervorrichtung dadurch aus, dass der zweite Bewegungszustand der Lineareinrichtung im inaktiven/ nicht angesteuerten Zustand der Blockiereinrichtung beziehungsweise der Blockiereinheit vorliegt und der erste Bewegungszustand der Lineareinrichtung im aktivierten / angesteuerten Zustand der Blockiereinrichtung beziehungsweise der Blockiereinheit vorliegt.

Eine im Betrieb besonders zuverlässig arbeitende, konstruktiv einfache und kostengünstige Ausführungsform der Linearblockiervorrichtung zeichnet sich dadurch aus, dass die Dreheinheit eine Spindel, insbesondere Kugelrollspindel mit einem Steilgewinde, aufweist.

In einer bevorzugten Ausführungsform besitzt die Spindel einen Durchmesser im Bereich zwischen 10 mm und 30 mm und bei einer besonders bevorzugten Ausführungsform im Bereich zwischen 15 mm und 25 mm und am bevorzugtesten um 20 mm.

Weiterhin liegt der Spindelhub bei einer bevorzugten Ausführungsform im Bereich zwischen 80 mm und 150 mm und in einer besonders bevorzugten Ausführungsform im Bereich zwischen 90 mm und 110 mm.

In einer weiteren bevorzugten Ausführungsform liegt die Hublänge der Spindel pro voller Umdrehung im Bereich zwischen 10 mm und 30 mm und in einer besonders bevorzugten Ausführungsform um 20 mm.

In einer besonders bevorzugten Ausführung im sicherheitsrelevanten Bereich, die sich durch eine besonders dauerhaft zuverlässige Blockier- und Freigabefunktion auszeichnet, ist die Linearblockiervorrichtung mit einer schwenkbaren oder linear verfahrbaren Sicherungseinrichtung, insbesondere einem Sicherheitsbügel, zur wahlweisen Sicherung von Personen, Gegenständen oder dergleichen gekoppelt.

Das erfindungsgemäße Baugruppensystem zur Sicherung und Freigabe von Personen, Gegenständen oder dergleichen der eingangs genannten Art ist durch die Merkmale des unabhängigen Anspruchs 10 gegeben. Demgemäß zeichnet sich das erfindungsgemäße Baugruppensystem dadurch aus, dass eine Linearblockiervorrichtung entsprechend der Merkmale der Ansprüche 1 bis 09 und eine Sicherungseinrichtung vorhanden sind und die Linearblockiervorrichtung als Sicherungs- und Freigabeorgan für die Sicherungseinrichtung fungiert.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Seitenansicht einer auf einem Sitz mittels eines Baugruppensystems gesicherten Person, unter Einsatz einer erfindungsgemäßen schematisch dargestellten Linearblockiervorrichtung,
- Fig. 2: Blockdiagramm der einzelnen Funktionseinrichtungen einer Linearblockiervorrichtung,
- Fig. 3: horizontale Längschnittdarstellung eines ersten Ausführungsbeispiels einer Linearblockiervorrichtung,
- Fig. 4a: Schnittdarstellung gemäß der Fig. 3 in einem zweiten Bewegungszustand einer Lineareinrichtung, in dem die Lineareinrichtung in zwei Linearrichtungen bewegbar ist,
- Fig. 4b: Schnittdarstellung gemäß der Fig. 3 in einem ersten Bewegungszustand einer Lineareinrichtung, in dem die Lineareinrichtung in einer Linearrichtung bewegbar ist,
- Fig. 5a: stark schematisierte Querschnittsdarstellung der Linearblockierungsvorrichtung im Bereich der Blockiereinrichtung gemäß Fig. 4a,
- Fig. 5b: stark schematisierte Querschnittsdarstellung der Linearblockierungsvorrichtung im Bereich der Blockiereinrichtung gemäß Fig. 4b,
- Fig. 6: horizontale Schnittdarstellung eines weiteren Ausführungsbeispiels der Linearblockiereinrichtung mit Fokus auf die Blockiereinheit,
- Fig. 7: schematische Seitenansicht einer auf einem Sitz mittels eines Baugruppensystems gesicherten Person, unter Einsatz einer hydraulischen Linearblockiervorrichtung (Stand der Technik).

### WEGE ZUM AUSFÜHREN DER ERFINDUNG

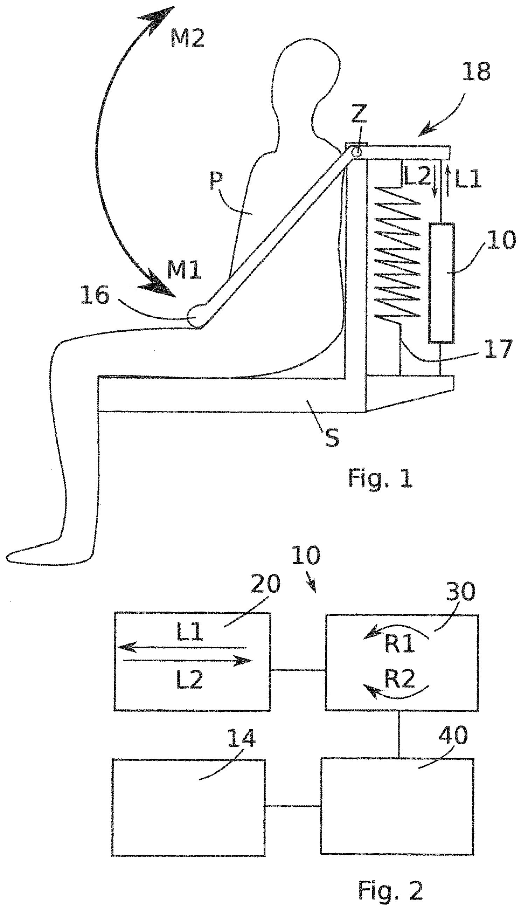

In Fig. 1 ist ein Baugruppensystem 18 mit einer gesicherten Person P dargestellt, wobei eine erfindungsgemäße Linearblockiervorrichtung 10 ein Teil des Baugruppensystems 18 darstellt. Zudem besteht das Baugruppensystem 18 aus einer, um ein Schwenkzentrum Z, in die Schwenkrichtungen M1, M2 schwenkbaren, Sicherungseinrichtung 16, einer Feder 17, die mit der Sicherungseinrichtung 16 rechtsseitig vom Schwenkzentrum Z gekoppelt ist und die linksseitig vom Schwenkzentrum Z die aufwärtsgerichtete Schwenkbewegung (im Uhrzeigersinn) der Sicherungseinrichtung 16 unterstützt. Die Linearblockiervorrichtung 10 ist ebenfalls mit der Sicherungseinrichtung 16 rechtsseitig vom Schwenkzentrum Z gekoppelt. In einem Betriebszustand des Baugruppensystems 18 ist die Sicherungseinrichtung 16 rechtsseitig vom Schwenkzentrum Z in beide Richtungen der Linearbewegung L1, L2 freigegeben und in einem anderen Betriebszustand ist die Sicherungseinrichtung 16 in der abwärts gerichteten Richtung L2 (im Uhrzeigersinn) blockiert.

Der erfinderische Gedanke liegt im Gegensatz zum Stand der Technik darin, die Linearblockiervorrichtung 10 hauptsächlich aus rein mechanischen Funktionseinrichtungen zusammenzusetzen.

In Fig. 2 ist ein Blockdiagramm der beteiligten Funktionseinrichtungen schematisch dargestellt. Zunächst ist eine Lineareinrichtung 20 vorhanden, die in zwei lineare Bewegungsrichtungen L1, L2 gegenüber einem festen Gehäuse verfahrbar ist. Die Lineareinrichtung 20 wirkt auf eine Dreheinrichtung 30 ein, die in zwei Drehrichtungen R1, R2 um eine Achse drehbar ist und durch eine Linearbewegung der Lineareinrichtung 20 in Rotation versetzt wird. Mit der Dreheinrichtung 30 steht eine ansteuerbare Blockiereinrichtung 40 in Wirkverbindung bzw. ist mit dieser in Wirkverbindung bringbar, wobei im aktivierten Zustand der Blockiereinrichtung 40 die Dreheinrichtung 30 in die beiden Drehrichtungen R1, R2 drehbar ist (zweiter Bewegungszustand der Lineareinrichtung L1, L2) und im nichtaktivierten Zustand lediglich in eine Drehrichtung (R1 oder R2) drehbar ist (erster Bewegungszustand der Lineareinrichtung L1 oder L2). Angesteuert wird die Blockiereinrichtung 40 mittels einer Schalteinrichtung 14, die beispielsweise von einem Bediener und/oder einem Elektroniksystem geführt wird.

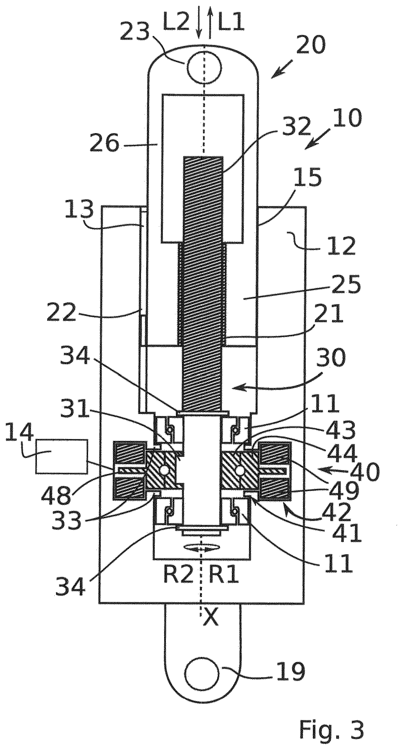

In Fig. 3 ist eine Linearblockiervorrichtung gemäß eines horizontalen Längsschnitts entsprechend des zweiten Bewegungszustands der Lineareinrichtung L1, L2 dargestellt, das heißt die Lineareinrichtung 20 ist bezüglich eines Gehäuses 12 gleitend gelagert und entlang der beiden linearen Bewegungsrichtungen L1, L2 verfahrbar. Die Lineareinrichtung 20 weist eine Rohreinheit 26, die koaxial zur Achse X ausgerichtet ist, auf, an deren dem Gehäuse abgewandten Endbereich sich ein zweites Kuppelelement 23 anschließt. Ein weiteres erstes Kuppelelement 19 ist vorhanden, dieses ist entlang der Achse X am gegenüberliegenden Teil des Gehäuses 12 angeordnet. An der Innenseite der Rohreinheit 26 ist in dem dem Gehäuse 12 zugewandten Endbereich innenumfänglich eine ringförmige Spindelmutter 25 angeschlossen, die oberflächlich auf der der Achse X zugewandten Seite eine wendelförmige Kontur 21 aufweist. Die Lineareinrichtung 20 ist an ihrer Außenseite innerhalb des Gehäuses 12 gleitend geführt, wobei die Führung 15 als Selbstführung ausgebildet ist, sodass die Lineareinrichtung 20 entlang der Achse X linear verfahrbar ist. Im Bereich der Führung 15 nimmt das die Lineareinrichtung 20 umschließende Gehäuse 12 im Wesentlichen eine mantelrohrartige Form an. An der dem Gehäuse 12 seitlich zugewandten Mantelseite der Lineareinrichtung 20 ist eine erste Passfeder 22 vorhanden, wobei die Passfeder 22 in einer Nut 13, welche an der Innenseite des Gehäuses 12 in Längsrichtung verläuft, geführt wird, wodurch die Bewegungsstrecke der Lineareinrichtung 20 entlang der X-Achse auch begrenzt wird.

Weiterhin ist eine koaxial zur Achse X ausgerichtete Dreheinrichtung 30 vorhanden. Diese weist eine Spindel 32 auf, die in die Spindelmutter 25 der Lineareinrichtung 20 eingreift, wobei eine Verschiebung der Lineareinrichtung 20 in eine der linearen Bewegungsrichtungen L1, L2 in eine Rotationsbewegung der Dreheinrichtung 30 um die Achse X in jeweils eine der beiden Drehrichtungen R1, R2 umgesetzt wird. Im Ringspalt, der sich zwischen einem spindelfreien Teil der Dreheinrichtung 30 und dem Gehäuse 12 ausbildet, sitzen an beiden Bauteilen radial anliegend zwei Axiallagereinheiten 11. Diese sind jeweils durch einen gehäuseseitigen Kragen 33 und einen dreheinrichtungsseitigen Kragen 34 entlang der Achse X fixiert, Die Axiallagereinheiten 11 fixieren somit die Dreheinrichtung 30 in linearer Bewegungsrichtung bezüglich des Gehäuses 12. Mittels einer zweiten Passfeder 31 wird die Rotationsbewegung der Dreheinrichtung 30 auf eine Blockiereinrichtung 40 übertragen. Die Blockiereinrichtung 40 besitzt eine Drehlagereinheit 41, die wiederum ein 1. Lagerelement 43 und ein 2. Lagerelement 44 aufweist. Die Lagerelemente 43, 44 sind in diesem Ausführungsbeispiel als Ringkörper ausgebildet, wobei die Drehlagereinheit 41 als Freilauf ausgebildet ist und die zweite Passfeder 31 in das 1. Lagerelement 43 eingreift. Besonders ist bei einem Freilauf, dass die Ringkörper relativ zueinander jeweils nur in eine Drehrichtung R1 um die Achse X rotierbar ausgebildet sind und die Relativrotation in die entgegengesetzte Drehrichtung R2 blockiert ist. An dem äußeren Ringkörper (Lagerelement 44) ist eine Bremsscheibe 48 angeformt, die ein Teil der Blockiereinheit 42 darstellt. Weiterhin weist die Blockiereinheit 42 zwei umlaufende Bremsbeläge 49 auf, welche an das Gehäuse 12 angeschlossen sind. Die Bremsscheibe 48 und die Bremsbeläge 49 bilden im dargestellten Ausführungsbeispiel gemeinsam eine Elektromagnetbremse aus. Eine nicht dargestellte Feder wirkt im inaktivierten Zustand der Blockiereinrichtung (keine Spannung an der Elektromagnetbremse) und blockiert das 2. Lagerelement 44 in beide Drehrichtungen R1, R2 (erster Bewegungszustand der Lineareinrichtung). Im aktivierten Zustand der Blockiereinrichtung 40 werden die Bremsbeläge 49 von der Bremsscheibe 48 entgegen der Federwirkung fortbewegt und das 2. Lagerelement 44 ist freigegeben (zweiter Bewegungszustand der Lineareinrichtung).

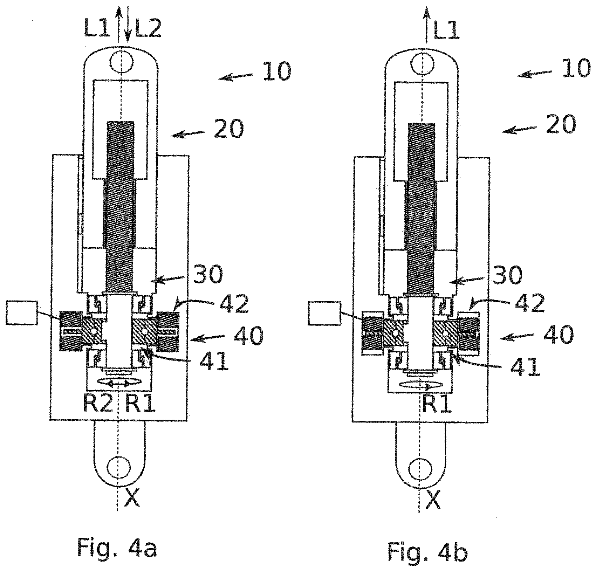

In der Fig 4a ist die zuvor erläuterte Linearblockiervorrichtung 10 dargestellt. Die Blockiereinrichtung 40 beziehungsweise die Blockiereinrichtung 42 ist gemäß des zweiten Bewegungszustand der Lineareinrichtung 20 aktiviert, sodass eine Rotation der Dreheinrichtung 30 in beide Drehrichtungen R1, R2 möglich ist und die Lineareinrichtung 20 in beide lineare Bewegungsrichtungen L1, L2 verschiebbar ist, da beide Lagerelemente 43, 44 der Drehlagereinheit 41 in keiner Drehrichtung R1, R2 blockiert sind.

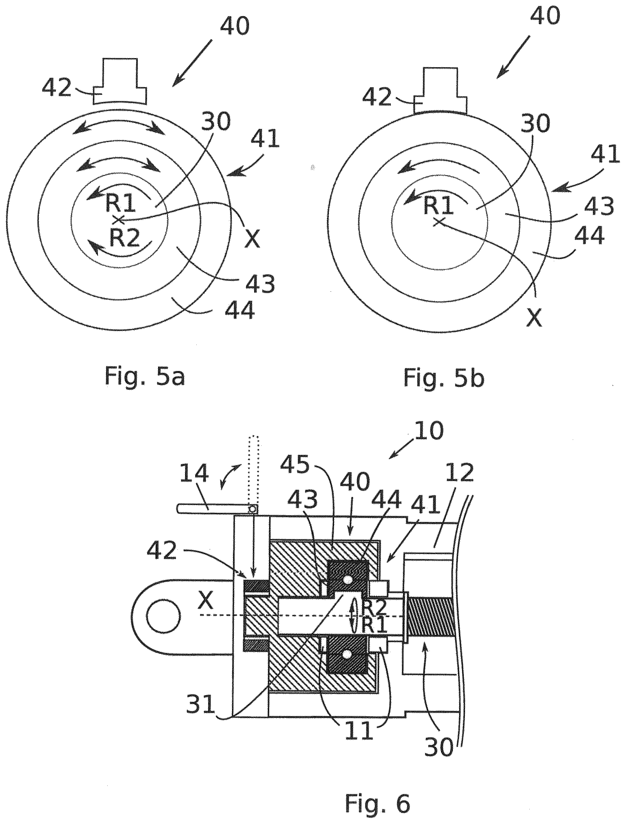

In Fig. 5a ist eine vereinfachte Querschnittsdarstellung durch die Blockiereinrichtung 40 und der Dreheinrichtung 30 im zweiten Bewegungszustand der Linerareinrichtung 20 mitsamt den angedeuteten Drehbarkeiten (Pfeile) der einzelnen Bauteile bezüglich der Achse X gezeigt. Die aktivierte Blockiereinheit 42 entfaltet zunächst keine fixierende/blockierende Wirkung auf das zweite Lagerelement 44 der Drehlagereinheit 41, sodass das 2. Lagerelement 44 beidseitig um die Achse X schwenkbar ist. Das 1. Lagerelement 43, welches relativ zum 2. Lagerelement 44 nur in eine Rotationsrichtung bewegbar ist, kann aufgrund des fehlenden Kraftangriffspunkt des 2. Lagerelements 44 am Gehäuse keine Blockierwirkung bezüglich des 2. Lagerelements 44 entfalten und ist somit auch in beide Drehrichtungen R1, R2 freigegeben, sodass auch die Dreheinrichtung 30 letztlich in beide Drehrichtungen drehbar ist.

In den Fig. 4b und 5b ist in analoger Form die Linerblockiervorrichtung 10 beziehungsweise die Blockiereinrichtung 40 und die Dreheinrichtung 30 beim Vorliegen des ersten Bewegungszustands der Lineareinrichtung 20 dargestellt, bei welchem die Dreheinrichtung 30 in einer Drehrichtung R2 blockiert ist. Dabei ist die Blockiereinheit 42 nicht aktiviert (d.h an der Elektromagnetbremse liegt keine Spannung an), sodass das 2. Lagerelement 44 der Drehlagereinheit 41 am Gehäuse von der Blockiereinheit 42 fixiert wird. Folglich ist die Drehbewegung des 1. Lagerelements 43 in eine Drehrichtung R1 gesperrt, da das 2. Lagerelement 44 festgehalten wird. Die mit dem 1. Lagerelement 43 in fester Verbindung stehende Dreheinrichtung 30 ist folglich auch nur in einer Drehrichtung R1 drehbar.

In Fig. 6 ist eine zweite Ausführungsvariante der Linearblockiervorrichtung 10 dargestellt, wobei lediglich der Bereich im Nahbereich der Blockiereinrichtung 40 betrachtet wird und der Bewegungszustand vorliegt, in welchem die Dreheinrichtung 30 in beide Drehrichtungen R1, R2 freigegeben ist. Im Bezug auf die vorangegangene Ausführungsvariante besteht der Unterschied darin, dass die Blockiereinheit 42 nicht direkt auf das 2. Lagerelement 44 der Drehlagereinheit 41 einwirkt, sondern eine Kontakteinheit 45 mit dem 2. Lagerelement 44 in fester Verbindung steht und sämtliche Rotationsbewegungen gleichsam mit ausführt. Im Bereich der Achse X sitzt linksseitig die aktivierte Blockiereinheit 42, mittels derer die Kontakteinheit 45 und damit auch das zweite Lagerelement 44 indirekt am Gehäuse 12 fixierbar ist, wodurch die Dreheinrichtung 30 in einer Bewegungsrichtung blockierbar ist. Die zweite Passfeder 31, das 1. Lagerelement 43 und die Axiallagereinheiten 11 besitzen eine ähnliche, beziehungsweise die gleiche Gestalt wie im vorangegangen Ausführungsbeispiel. Ein weiterer Unterschied zum vorangegangen Ausführungsbeispiel besteht darin, dass die Schalteinrichtung 14 nicht als elektronisches Bauteil ausgebildet ist sondern als mechanischer, schwenkbarer Schalter, mittels welchem die Blockiereinheit 42 aktivierbar ist. Ebenso kann dieser in einer weiteren nichtdargestellten Ausführungsform als Knopfschalter ausgeführt sein.

Die prinzipielle Funktionsweise der Linearblockiervorrichtung 10 kann gemäß Fig. 1 wie folgt beschrieben werden. Durch eine äußere Kraft, die an dem zweiten Kuppelelement 23 angreift, kann eine Lineareinrichtung 20 entweder nur einfahren oder nur ausfahren (je nach Orientierung der Spindel 32). Die jeweils entgegengesetzte Bewegungsrichtung kann nur durch einen elektrischen oder manuellen Impuls, der von einer Schalteinrichtung 42 ausgeht, freigegeben werden. Dieses wird dadurch realisiert, dass die Linearbewegung über die Spindel 32, die beispielsweise als Steilgewindekugelrollspindel ausgebildet ist, in eine rotatorische Bewegung umgewandelt wird. Ein beispielhafter Durchmesser einer solchen Spindel liegt beispielsweise bei 20 mm. Die Hublänge pro voller Umdrehung der Spindel liegt beispielsweise bei 20 mm und der Gesamthub der Lineareinrichtung 20 liegt beispielsweise im Bereich zwischen 80 mm bis 150 mm. Es können problemlos auch größere oder kleinere Abmessungen umgesetzt werden. Ein Freilauf blockiert die Rotationsbewegung in einer Richtung. Somit kann je nachdem, in welcher Richtung der Freilauf eingebaut ist, die Lineareinrichtung 20 nur ein- oder ausgefahren werden. Der äußere Ringkörper des Freilaufs 32 wird dabei beispielsweise über eine Elektromagnetbremseinheit über mechanische Federn gehalten. Durch das Anlegen einer elektrischen Spannung kann diese freigegeben werden und die Lineareinrichtung 10 kann entgegen ihrer ursprünglichen blockierten Richtung bewegt werden, bis die Spannung wieder weggenommen ist.

Das Blockieren des Freilaufs 32, beziehungsweise das Festhalten des äußeren Ringkörpers, kann dabei durch eine Blockiereinheit 42 (Blockiersystem) herbeigeführt werden, die entweder nach dem Prinzip des Reibschlusses oder des Formschlusses arbeitet. Generell ist es auch nicht zwingend erforderlich, dass die Blockiereinheit 42 direkt auf den Freilauf einwirkt. Der Freilauf kann nämlich auch mit weiteren Bauteilen / einem weiteren Bauteil gekoppelt sein, die / das durch eine Drehbewegung des äußeren Ringkörpers ebenfalls in irgendeiner Form in Bewegung versetzt werden/ wird, bevorzugt mitrotieren / mitrotiert und die Blockiereinheit 42 ihre blockierende Wirkung auf diese Bauteile/ dieses Bauteil entfaltet, sodass der äußere Ringkörper lediglich indirekt blockierbar ist.

## Patentansprüche

1. Linearblockiervorrichtung (10) mit
- einer entlang einer Achse (X) längsverschieblichen in einem Gehäuse (12) geführten Lineareinrichtung (20), wobei zumindest zwischen zwei Bewegungszuständen der Lineareinrichtung (20) mittels einer anschließbaren oder integrierten Schalteinrichtung (14) hin und her schaltbar ist, nämlich zwischen
- - einem ersten Bewegungszustand (L1 oder L2), bei welchem die Lineareinrichtung (20) entlang der Achse (X) innerhalb einer begrenzten Wegstrecke entweder in die dem Gehäuse (12) abgewandten Bewegungsrichtung (L1) oder in die dem Gehäuse (12) zugewandten Bewegungsrichtung (L2) verschieblich ist und in die jeweils entgegengesetzte Richtung blockiert ist und
- - einem zweiten Bewegungszustand (L1 und L2), bei welchem die Lineareinrichtung (20) entlang der Achse (X) in die beiden entgegengesetzten Bewegungsrichtungen (L1, L2) innerhalb einer begrenzten Wegstrecke verschieblich ist, wobei
- die Lineareinrichtung (20) direkt oder indirekt auf eine vorhandene Dreheinrichtung (30) einwirkt, wobei die Dreheinrichtung (30) in Abhängigkeit von der Bewegungsrichtung (L1, L2) der Lineareinrichtung (20) in verschiedensinnige Drehrichtungen (R1, R2), insbesondere um die Achse (X), in Rotation versetzbar ist,
- eine, insbesondere mechanische, Blockiereinrichtung (40) vorhanden ist, die direkt oder indirekt mit der Dreheinrichtung (30) in Wirkverbindung steht oder bringbar ist,
- die Blockiereinrichtung (40) von der Schalteinrichtung (14) ansteuerbar ist, wodurch zwischen dem ersten Bewegungszustand (L1 oder L2) und zweiten Bewegungszustand (L1 und L2) der Lineareinrichtung (20) und damit zwischen den möglichen Drehrichtungen (R1, R2) der Dreheinrichtung (30) hin und her schaltbar ist,
- **dadurch gekennzeichnet, dass**
- die Blockiereinrichtung (40) eine Drehlagereinheit (41) mit einem rotierbaren 1. Lagerelement (43) und einem relativ dazu rotierbaren 2. Lagerelement (44) aufweist,
- das 1. Lagerelement (43) mit der Dreheinrichtung (30) direkt oder indirekt gekoppelt ist und
- die Blockiereinrichtung (40) eine Blockiereinheit (42) aufweist, mittels derer die Drehbewegung des 2. Lagerelements (44) in beiden Drehrichtungen (R1, R2) blockierbar ist und
- das 1. Lagerelement (43) relativ zu dem 2. Lagerelement (44) jeweils nur in eine Drehrichtung (R2) rotierbar ausgebildet ist und eine Relativrotation in die entgegengesetzte Drehrichtung (R1) blockiert ist.

2. Linearblockiervorrichtung nach Anspruch 1,
- **dadurch gekennzeichnet, dass**
- die Drehlagereinheit (41) als Freilauf ausgebildet ist, wobei das 1. Lagerelement (43) und das 2. Lagerelement (44) koaxial angeordnete, radial versetzte Ringkörper aufweisen, nämlich einen inneren Ringkörper und einen äußeren Ringkörper.

3. Linearblockiervorrichtung nach Anspruch 1,
- **dadurch gekennzeichnet, dass**
- die Blockiereinheit (42) als Bremseinheit, insbesondere Formschluss- oder Reibschlussbremseinheit, ausgebildet ist.

4. Linearblockiervorrichtung nach Anspruch 3,
- **dadurch gekennzeichnet, dass**
- die Bremseinheit als elektromagnetische Bremseinheit ausgebildet ist.

5. Linearblockiervorrichtung nach einem oder mehreren der vorstehenden Ansprüche,
- **dadurch gekennzeichnet, dass**
- an die Drehlagereinheit (41) beziehungsweise an das 2. Lagerelement (44) eine Kontakteinheit (45) angeformt oder angeschlossen ist auf die die Blockiereinheit (42) einwirkt.

6. Linearblockiervorrichtung nach einem oder mehreren der vorstehenden Ansprüche,
- **dadurch gekennzeichnet, dass**
- die Blockiereinrichtung (40) beziehungsweise die Blockiereinheit (42) durch die Schalteinheit (14) ansteuerbar/ aktivierbar ist, wobei
- die Schalteinheit als ein mechanisches, pneumatisches, hydraulisches und / oder elektronisches Bauteil ausgebildet ist.

7. Linearblockiervorrichtung nach einem oder mehreren der vorstehenden Ansprüche,
- **dadurch gekennzeichnet, dass**
- der zweite Bewegungszustand (L1 und L2) der Lineareinrichtung (20) im aktivierten/angesteuerten Zustand der Blockiereinrichtung (40) beziehungsweise der Blockiereinheit (42) vorliegt und
- der erste Bewegungszustand (L1 oder L2) der Lineareinrichtung (20) im inaktiven/ nicht angesteuerten Zustand der Blockiereinrichtung (40) beziehungsweise der Blockiereinheit (42) vorliegt.

8. Linearblockiervorrichtung nach einem oder mehreren der vorstehenden Ansprüche,
- **dadurch gekennzeichnet, dass**
- die Dreheinheit (30) eine Spindel, insbesondere Kugelrollspindel mit einem Steilgewinde, aufweist.

9. Linearblockiervorrichtung nach einem oder mehreren der vorstehenden Ansprüche,
- **dadurch gekennzeichnet, dass**
- sie mit einer schwenkbare oder linear verfahrbaren Sicherungseinrichtung (16), insbesondere Sicherheitsbügel, zur wahlweisen Sicherung von Personen, Gegenständen oder dergleichen verbunden ist.

10. Baugruppensystem (18) zur Sicherung und Freigabe von Personen, Gegenständen oder dergleichen,
- **dadurch gekennzeichnet, dass**
- eine Linearblockiervorrichtung (10) entsprechend der Ansprüche 1 bis 09 und eine Sicherungseinrichtung (16) vorhanden ist und die Linearblockiervorrichtung (10) als Sicherungs- und Freigabeorgan für die Sicherungseinrichtung (16) fungiert.

## Claims

1. A linear blocking apparatus (10) having
- a linear device (20) which is longitudinally displaceable along an axis (X) and is guided in a housing (12), wherein it is possible to switch back and forth, by means of a connectable or integrated switching device (14), at least between two motional states of the linear device (20), namely between
- - a first motional state (L1 or L2), in which the linear device (20) is displaceable along the axis (X) within a limited length of travel, either in the motional direction (L1) facing away from the housing (12) or in the motional direction (L2) facing toward the housing (12), and is blocked in the respectively opposite direction, and
- - a second motional state (L1 and L2), in which the linear device (20) is displaceable along the axis (X) within a limited length of travel, in the two opposite motional directions (L1, L2),
whereby
- the linear device (20) acts directly or indirectly on a rotary device (30) which is present, wherein the rotary device (30), in dependence on the motional direction (L1, L2) of the linear device (20), can be set in rotation in diverse rotational directions (R1, R2), in particular about the axis (X),
- an, in particular mechanical, blocking device (40) is present, which is, or can be brought, directly or indirectly in operative connection with the rotary device (30),
- the blocking device (40) is actuable by the switching device (14), whereby it is possible to switch back and forth between the first motional state (L1 or L2) and second motional state (L1 and L2) of the linear device (20), and hence between the possible rotational directions (R1, R2) of the rotary device (30),
- **characterized in that**
- the blocking device (40) has a pivot bearing unit (41) having a rotatable 1st. bearing element (43), and a 2nd. bearing element (44) which is rotatable relative thereto,
- the 1st. bearing element (43) is directly or indirectly coupled to the rotary device (30) and
- the blocking device (40) has a blocking unit (42), by means of which the rotary motion of the 2nd. bearing element (44) is blockable in both rotational directions (R1, R2) and
- the 1st. bearing element (43) is configured rotatably relative to the 2nd. bearing element (44) respectively only in one rotational direction (R2), and a relative rotation in the opposite rotational direction (R1) is blocked.

2. The linear blocking apparatus as claimed in claim 1,
- **characterized in that**
- the pivot bearing unit (41) is configured as a freewheel mechanism, wherein the 1st. bearing element (43) and the 2nd. bearing element (44) have coaxially arranged, radially offset annular bodies, namely an inner annular body and an outer annular body.

3. The linear blocking apparatus as claimed in claim 1,
- **characterized in that**
- the blocking unit (42) is configured as a braking unit, in particular a positive-locking or non-positive-locking braking unit.

4. The linear blocking apparatus as claimed in claim 3,
- **characterized in that**
- the braking unit is configured as an electromagnetic braking unit.

5. The linear blocking apparatus as claimed in one or more of the preceding claims,
- **characterized in that**
- a contact unit (45), on which the blocking unit (42) acts, is formed onto or connected to the pivot bearing unit (41) or the 2nd. bearing element (44).

6. The linear blocking apparatus as claimed in one or more of the preceding claims,
- **characterized in that**
- the blocking device (40) or the blocking unit (42) is actuable/activatable by the switching unit (14), wherein
- the switching unit is configured as a mechanical, pneumatic, hydraulic and/or electronic component.

7. The linear blocking apparatus as claimed in one or more of the preceding claims,
- **characterized in that**
- the second motional state (L1 and L2) of the linear device (20) obtains in the activated/actuated state of the blocking device (40) or of the blocking unit (42), and
- the first motional state (L1 or L2) of the linear device (20) obtains in the inactive/non-actuated state of the blocking device (40) or of the blocking unit (42).

8. The linear blocking apparatus as claimed in one or more of the preceding claims,
- **characterized in that**
- the rotary unit (30) has a spindle, in particular a ball screw having a coarse thread.

9. The linear blocking apparatus as claimed in one or more of the preceding claims,
- **characterized in that**
- it is connected to a pivotable or linearly movable locking device (16), in particular a safety bar, for the selective securement of persons, objects or the like.

10. A modular system (18) for the securement and release of persons, objects or the like,
- **characterized in that**
- a linear blocking apparatus (10) in accordance with claims 1 to 09 and a locking device (16) are present, and the linear blocking apparatus (10) functions as a securing and release member for the locking device (16).

## Revendications

1. Dispositif de blocage linéaire (100) avec
- un dispositif linéaire (20) guidé de façon mobile longitudinalement le long d'un axe (X) dans un boîtier (12), dans lequel il est possible de commuter en alternance au moins entre deux états de mouvement du dispositif linéaire (20) au moyen d'un dispositif de commutation (14) pouvant être raccordé ou intégré, à savoir entre
-- un premier état de mouvement (L1 ou L2), dans lequel le dispositif linéaire (20) est déplaçable le long de l'axe (X) à l'intérieur d'une course limitée soit dans la direction de mouvement (L1) détournée du boîtier (12) soit dans la direction de mouvement (L2) tournée vers le boîtier (12) et est bloqué dans la direction respectivement opposée, et
-- un second état de mouvement (L1 et L2), dans lequel le dispositif linéaire (20) est déplaçable le long de l'axe (X) dans les deux directions de mouvement opposées (L1, L2) à l'intérieur d'une course limitée,
dans lequel
- le dispositif linéaire (20) agit directement ou indirectement sur un dispositif rotatif existant (30), dans lequel le dispositif rotatif (30) peut être mis en rotation dans des directions de rotation de sens contraire (R1, R2), en particulier autour de l'axe (X), en fonction de la direction de mouvement (L1, L2) du dispositif linéaire (20),
- il se trouve un dispositif de blocage (40), en particulier mécanique, qui est ou peut être en liaison active directement ou indirectement avec le dispositif rotatif (30),
- le dispositif de blocage (40) peut être commandé par le dispositif de commutation (14), ce qui permet de commuter en alternance entre le premier état de mouvement (L1 ou L2) et le second état de mouvement (L1 et L2) du dispositif linéaire (20) et de ce fait entre les directions de rotation possibles (R1, R2) du dispositif rotatif (30),
**caractérisé en ce que**
- le dispositif de blocage (40) présente une unité de palier de rotation (41) avec un premier élément de palier rotatif (43) et un second élément de palier (44) rotatif par rapport à celui-ci,
- le premier élément de palier (43) est couplé directement ou indirectement avec le dispositif rotatif (30)
et
- le dispositif de blocage (40) présente une unité de blocage (42), au moyen de laquelle le mouvement de rotation du second élément de palier (44) peut être bloqué dans les deux directions de rotation (R1, R2) et
- le premier élément de palier (43) peut chaque fois tourner par rapport au second élément de palier (44) uniquement dans une direction de rotation (R2) et une rotation relative dans la direction de rotation opposée (R1) est bloquée.

2. Dispositif de blocage linéaire selon la revendication 1, **caractérisé en ce que**
- l'unité de palier de rotation (41) est formée par une roue libre, dans lequel le premier élément de palier (43) et le second élément de palier (44) présentent des corps annulaires décalés radialement et disposés de façon coaxiale, à savoir un corps annulaire intérieur et un corps annulaire extérieur.

3. Dispositif de blocage linéaire selon la revendication 1, **caractérisé en ce que**
- l'unité de blocage (42) est constituée par une unité de freinage, en particulier une unité de freinage à emboîtement ou à friction.

4. Dispositif de blocage linéaire selon la revendication 3, **caractérisé en ce que**
- l'unité de freinage est constituée par une unité de freinage électromagnétique.

5. Dispositif de blocage linéaire selon une ou plusieurs des revendications précédentes, **caractérisé en ce que**
- une unité de contact (45) sur laquelle agit l'unité de blocage (42) est formée ou reliée à l'unité de palier de rotation (41) ou au second élément de palier (44).

6. Dispositif de blocage linéaire selon une ou plusieurs des revendications précédentes, **caractérisé en ce que**
- le dispositif de blocage (40) ou l'unité de blocage (42) peut être commandé(e)/activé(e) par l'unité de commutation (14), dans lequel
- l'unité de commutation est formée par un élément mécanique, pneumatique, hydraulique et/ou électronique.

7. Dispositif de blocage linéaire selon une ou plusieurs des revendications précédentes, **caractérisé en ce que**
- le second état de mouvement (L1 et L2) du dispositif linéaire (20) se trouve dans l'état activé/commandé du dispositif de blocage (10) ou de l'unité de blocage (42) et
- le premier état de mouvement (L1 ou L2) du dispositif linéaire (20) se trouve dans l'état inactif/non commandé du dispositif de blocage (40) ou de l'unité de blocage (42).

8. Dispositif de blocage linéaire selon une ou plusieurs des revendications précédentes, **caractérisé en ce que**
- l'unité rotative (30) présente une broche, en particulier une broche à roulement à billes avec un filet de réglage.

9. Dispositif de blocage linéaire selon une ou plusieurs des revendications précédentes, **caractérisé en ce que**
- il est relié à un dispositif de sécurisation (16) pouvant pivoter ou se déplacer linéairement, en particulier un arceau de sécurité, pour la sécurisation au choix de personnes, d'objets ou analogues.

10. Système de modules (18) pour la sécurisation et la libération de personnes, d'objets ou analogues, **caractérisé en ce que**
- il se trouve un dispositif de blocage linéaire (10) selon les revendications 1 à 9 et un dispositif de sécurisation (16) et le dispositif de blocage linéaire (10) fait office d'organe de sécurisation et de libération pour le dispositif de sécurisation (16).
